(19) Europäisches Patentamt
European Patent Office
Office européen des brevets

(11) **EP 1 754 920 A1**

(12) **EUROPEAN PATENT APPLICATION**
published in accordance with Art. 158(3) EPC

(43) Date of publication:
**21.02.2007 Bulletin 2007/08**

(51) Int Cl.:
***F16L 15/04*** *(2006.01)*

(21) Application number: **05745891.1**

(22) Date of filing: **31.05.2005**

(86) International application number:
**PCT/JP2005/009934**

(87) International publication number:
**WO 2005/121622 (22.12.2005 Gazette 2005/51)**

(84) Designated Contracting States:
**AT BE BG CH CY CZ DE DK EE ES FI FR GB GR HU IE IS IT LI LT LU MC NL PL PT RO SE SI SK TR**

(30) Priority: **09.06.2004 JP 2004170917**

(71) Applicant: **Metal One Corporation Tokyo 105-0014 (JP)**

(72) Inventor: **SUZUKI, Teruaki Yokohama-shi, Kanagawa 245-0002 (JP)**

(74) Representative: **Patentanwälte Westphal, Mussgnug & Partner Am Riettor 5 D-78048 Villingen-Schwenningen (DE)**

(54) **SCREW COUPLING FOR OIL WELL PIPE**

(57) There is provided a screw joint for oil well tubing, excellent in seal performance and having a high maintainability.

A screw joint for oil well tubing comprising a male screw tube equipped with a seal forming portion having a convex curved surface shape on a tip end portion of the tube and a female screw tube equipped with a tapered seal portion, wherein when the convex curved surface shape comes into contact with the tapered seal portion, a contact surface pressure Pc60 equivalent to 60% of a maximum contact surface pressure Pcmax applied to a contact surface is larger than an inner pressure Pi applied to the screw joint and is smaller than a proportional limit or of a screw joint material, wherein a taper angle θs of the tapered seal portion and an angle θt of a tapered screw satisfy a formula θs ≥ θt, and curvature radius R of the convex curved surface shape is not smaller than 90 mm and not larger than 170 mm, wherein the angle θs is from 1.4 degree to 9.5 degree at an apex angle, wherein a length of the convex curved surface shape in an axial direction is at least not smaller than 1.5 mm backward and forward from a tangent point, and wherein a surface roughness H of the convex curved surface and the tapered seal portion is not larger than 12s.

FIG. 1

**Description**

Technical Field

The present invention relates to a screw joint for oil well tubing.

Background Art

Recently, oil fields and gas fields to be excavated become deeper and more highly pressurized. Following the circumstance, it is required that a screw joint used for oil well tubing has a high performance in a sealing performance and durability. In order to cope with this, a number of special screws have been developed.

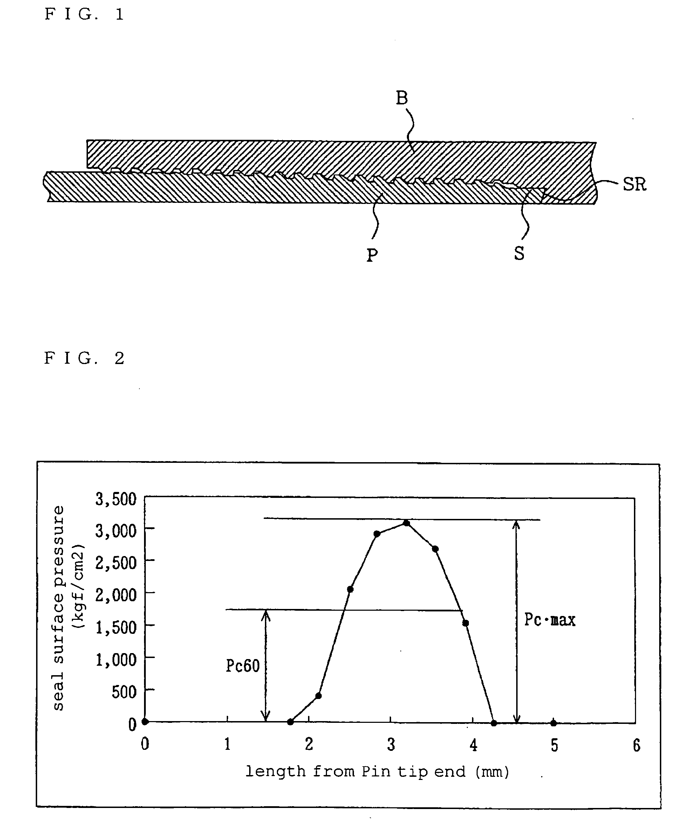

The conventional special screw is configured to form a metal seal by a tip end of a Pin (male screw) and an inside of a Box (female screw), as shown in Fig. 1. Many researches and developments are made for a seal shape of the special screw.

As one of them, a seal referred to as a tangent point seal, formed by a combination of the Pin having a seal surface with a convex curved surface shape and the Box having a tapered seal surface, has been developed as the screw relatively reliable as disclosed in Japanese Patent Application Laid-Open No. 61-6488.

However, even if the seal has a same basic configuration of "combination of the Pin having the seal surface with the convex curved surface shape and the Box having the tapered seal surface" , the seal could cause a problem of galling of the seal portion, a leak of an internal pressure applied to the tube, or the like, in a case in which dimensions of interference, length and taper of the seal are not properly determined in a detailed design thereof.

Disclosure of the Invention

Problems to be Solved

That is to say, the conventional special screw has several problems to be solved.

First, as a first problem, an upper limit of a maximum contact surface pressure Pcmax of the seal portion is supposed to satisfy a following condition from the viewpoint of inhibiting a plastic deformation of the seal when making up.

That is, a formula

$$\text{Pcmax} < (\text{yield stress } \sigma r \text{ of screw joint material})$$

should be satisfied.

However, even if the maximum contact surface pressure Pcmax of the seal portion is set lower than the yield stress, the plastic deformation practically occurs at the seal portion when making up the screw, so that if the screw is broken out and made up again, there is a case in which the seal portion cannot obtain a predetermined contact surface pressure Pc, due to the plastic deformation.

Second, as a second problem, a lower limit of the maximum contact surface pressure Pcmax of the conventional seal portion is supposed to satisfy a following condition from the viewpoint of ensuring a leak-resistant performance of the seal. That is, a formula

$$(\text{inner pressure Pi applied to screw joint}) < (\text{contact surface pressure Pcmax})$$

should be satisfied.

This is a necessary condition but not a sufficient condition.

That is to say, even if the lower limit of the maximum contact surface pressure Pcmax of the seal portion satisfies the above-described condition, when a substantial contact length of the seal portion is short, a leak occurs in the seal portion.

Third, as a third problem, a surface roughness of the convex curved surface of the Pin highly relates to galling and a leak.

The applicant has obtained knowledge that when a degree of accuracy of the seal portion including the surface roughness of the convex curved surface is not excellent, this might cause galling and a leak at the seal portion.

In view of the above-described circumstances, an object of the present invention is to solve these problems and provide the screw joint for oil well tubing, excellent in seal performance and having a high maintainability.

Means to Solve the Problems

A screw joint for oil well tubing according to the present invention;

1) in tapered screwtube joint including a male screwtube equipped with a seal forming portion having a convex curved surface shape in a tube axis direction on a tip end of the tube and a female screw tube equipped with a tapered seal portion opposing to the seal forming portion, when the convex curved surface shape comes into contact with the tapered seal portion, a contact surface pressure Pc60 equivalent to 60% of a maximum contact surface pressure Pcmax applied to a contact surface is designed to be larger than an inner pressure Pi applied to a screw joint and smaller than a proportional limit σe of a mechanical strength of a screw joint material.

Further, a screw joint for oil well tubing according to the present invention;

2) in the above-described 1), a seal taper angle θs of the tapered seal portion and a taper angle θt of a tapered screw satisfy a formula θs ≥ θt, and a curvature radius R of the convex curved surface shape is not smaller than 90 mm and not larger than 170 mm,
3) in the above-described 1) or 2), the seal taper angle θt of the tapered seal portion is from 1.4 degree to 9.5 degree at an apex angle,
4) in the above-described 1) to 3), a length of the convex curved surface shape in an axial direction is at least not smaller than 1.5 mm backward and forward from a tangent point in the axial direction, and
5) in the above-described 1) to 4), a surface roughness H of the convex curved surface and the tapered seal portion is not larger than 12s.

Effects of the Invention

With a screw joint for oil well tubing according to the present invention, it is possible to provide an economic oil well tubing system, excellent in seal performance and maintainability.

Brief Description of an Drawings

Fig. 1 is a schematic view showing a basic configuration of a screw joint of an example.
Fig. 2 is a graph showing a calculation result of a contact surface pressure Pc after fitting, in a combination of a Pin having a convex curved surface-shape seal portion and a Box having a tapered seal portion.
Fig. 3 is a schematic view showing a basic configuration of the seal portion of the example.
Fig. 4 is graph showing an effect of a shoulder angle to a surface pressure.
Fig. 5 is a schematic view showing a cross-sectional shape of a screw of a tapered screw portion of the example.
Fig. 6 is a view showing a final design value of the example.

Best Mode for Carrying out the Invention

Embodiment 1

An embodiment 1 of the present invention will be successively described in detail in accordance with ways of solving the above-described problems to be solved.
First, relating to the first problem;
as described above, conventionally, an upper limit of a maximum contact surface pressure Pcmax of a seal portion has been designed to satisfy a formula

$$\text{Pcmax} > (\text{yield stress } \sigma r \text{ of screw joint material}),$$

from the viewpoint of preventing a plastic deformation of the seal portion when fitting.

However, in practice, the seal portion plastically deforms when fitting a screw portion, even when the maximum contact surface pressure Pcmax of the seal portion is lower than the yield stress, so that there is a case in which a predetermined contact surface pressure Pc is not obtained by the plastic deformation, when the screw portion is wound back and fitted again.

In order to prevent this, in the Embodiment 1 of the present invention, the upper limit of the maximum contact surface pressure Pcmax is not set to the yield stress σr but equal to or lower than a proportional limit σe of a mechanical strength of the screw joint material.

And since the contact surface pressure Pc is proportional to a seal interference △DS, it is required to control △DS.

To give an API grade N80, which is a standard of the oil well tubing, as a specific example, a distortion amount to cause yielding is 0.5%, but the distortion amount of the proportional limit is 0.3%.

That is to say, it is required that a formula

$$\Delta\text{DS} < (\text{distortion amount of the proportional limit})$$

is satisfied.

Second, relating to the second problem;

from a calculation result by a finite element method using a computer, performed by the applicant, it is found that distribution of the contact surface pressure Pc of the seal portion after fitting, in a combination of a Pin having a seal portion with a convex curved surface shape and a Box having a tapered seal portion, is obtained as shown in Fig. 2.

In the conventional regulation, it has been required that a formula

maximum contact surface pressure Pcmax > internal pressure Pi

is satisfied. As a result of a test, there has been a case in which a leak occurs even when the formula

$$\text{Pcmax} > \text{Pi}$$

is satisfied in a point contact.

As a result of a further test, it has been found that contact surface pressure $Pc \geq Pi$

should be satisfied over a certain contact length.

Finally, it has been confirmed that, in the distribution of the contact surface pressure as shown in Fig. 2, if there is the contact surface pressure equivalent to 60% of the maximum contact surface pressure Pcmax, and the contact length is secured, this has a sufficient leak-resistant performance.

And, for the third problem;

from results of a number of practical tests, the applicant has obtained knowledge that a surface roughness H of the seal portion of the Pin having the seal portion with the convex curved surface shape, should be set not more than 12S, in order to prevent galling and a leak of the portion. When the surface roughness H of the seal portion is larger than 12S, it is relatively possible that a leak occurs.

And, as other measures to prevent galling and a leak, there are setting of an appropriate seal length, arrangement of an appropriate grease pocket, setting of appropriate values of a seal taper angle and a screwtaper angle, setting of an appropriate value of a shoulder angle, or the like. The appropriate values were set by the confirmation by the finite element method and the result of the practical tests.

Example 1

Based on the above-described embodiment, an example of the screw joint for oil well tubing for API grade N80 tubing, in which outer diameter x tube wall thickness = 3 • 1/2" (88.9 mm) x 0.254" (6.45 mm), will be described.

Fig. 1 is a schematic view showing a basic configuration of the screw joint of Example 1.

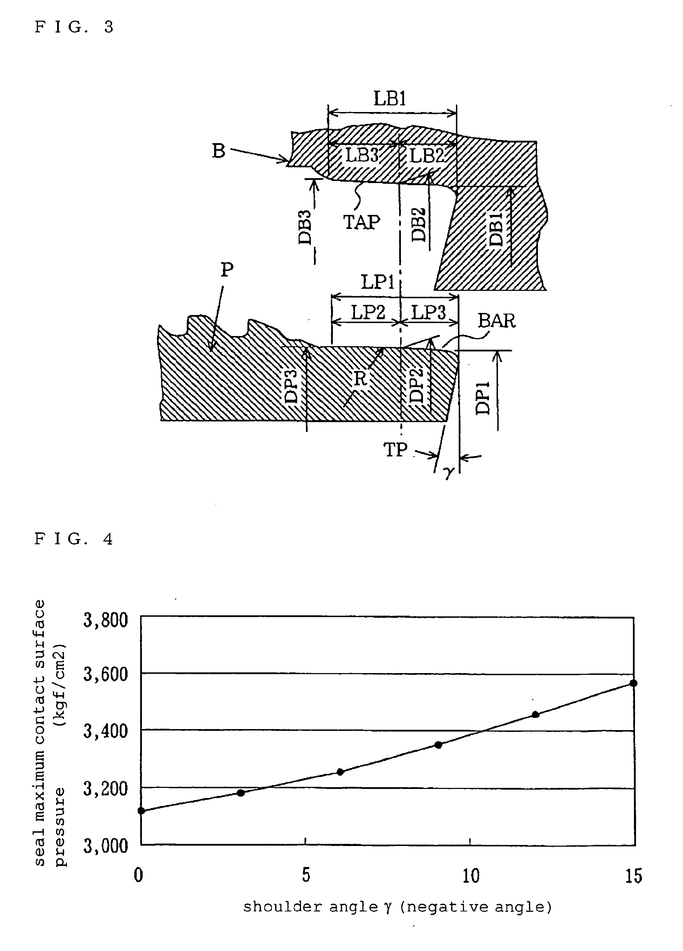

Fig. 3 is a schematic view showing a basic configuration of the seal portion of the Example 1.

Fig. 4 is a graph showing an effect of the shoulder angle to the surface pressure.

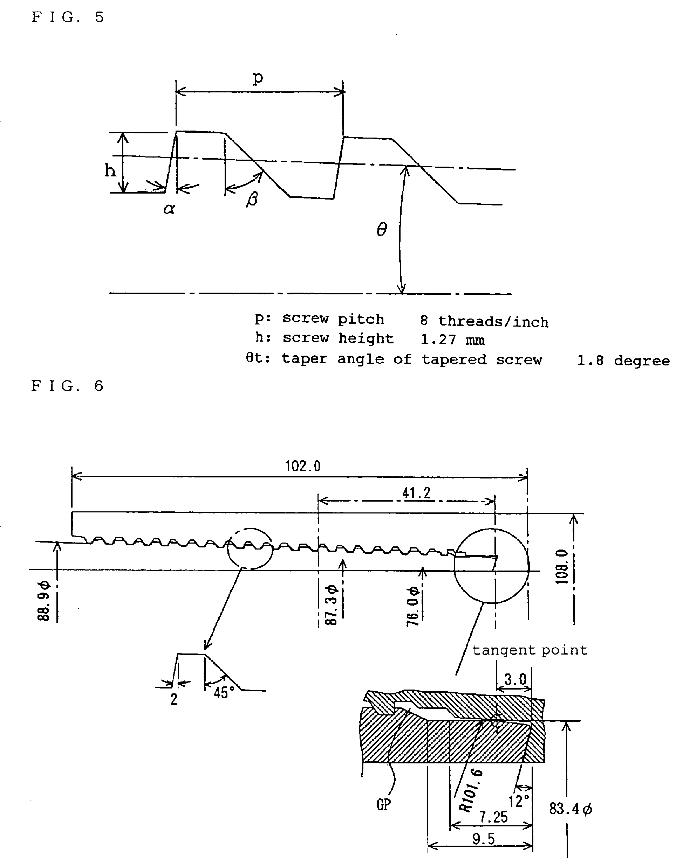

Fig. 5 is a schematic view showing a cross-sectional shape of the screw of the tapered screw portion of the Example 1.

In the drawings, reference numeral P represents the Pin having the seal portion with the convex curved surface shape, reference numeral B represent the Box having the tapered seal portion, reference numeral S represents the seal portion, reference numeral SR represents the shoulder portion, reference numeral TAP represents the tapered seal portion, reference numeral BAR represents the convex curved surface-shape portion, reference numeral R represents a curvature radius of the convex curved surface-shape portion, reference numeral TP represents a tangent point which is a contact point of the convex curved surface-shape portion and the tapered seal portion, reference numeral LP1 represents a length of the convex curved surface-shape portion in an axial direction, reference numeral LB1 represents a length of the tapered seal portion in an axial direction, reference numeral DP2 represents a diameter of the convex curved surface-shape portion at the tangent point, and reference numeral DB2 represents a diameter of the tapered seal portion at the tangent point, respectively.

The basic configuration of the screw joint of the Example 1 is a coupling type screw joint as shown in Fig. 1. The screw joint of the Example 1 is configured to join and fit the convex curved surface-shape portion BR having a convex curved surface with the curvature radius R equipped on a tip end of the PinP, and the tapered seal portion TAP of the BoxB at the tangent point TP within an elastic deformation, by cramping and fitting the same using highly accurate tapered screws installed within the Pin (male screw) P and the Box (female screw) B.

A shape of the tapered screw in the Example 1 is such that a load angle $\alpha$ is 2 degree and a stabbing angle $\beta$ is 45 degree, as shown in Fig. 5. The taper angle $\theta t$ of the tapered screw was set 3. 6 degree at an apex angle, a screw reference diameter was set 87.3 mm, and the screw length was set 77.3 mm. And the curvature radius R of the convex curved surface-shape portion BR was set 101.6 mm, and the length of the convex curved surface-shape portion BR in the axial direction was set 7.25 mm.

In Example 1 of the invention, the specifications were set by following procedures.

Procedure 1: Determining the maximum value of the interference ΔDS of the seal portion S

In order to prevent the plastic deformation, it is required that a formula

$$\Delta DS \leq proportional\ limit$$

is satisfied, and with the API grade N80, the distortion amount corresponding to the proportional limit is 0.3%. Therefore,

$$\Delta DS\ maximum\ value = 0.003 \times OD = 0.003 \times 88.9 = 0.27\ mm$$

(wherein, OD represents an outer diameter of the Pin tube).

Procedure 2: Determining the minimum value of the interference △DS of the seal portion S

In Fig.2, the seal interference △DS is determined such that the contact surface pressure Pc60 is higher than a minimum pressure-resistant performance value of a standard of the target tubing, that is to say, so as to satisfy a formula (minimum pressure-resistant performance value of standard) $\leq$ (seal contact surface pressure Pc60).

Originally, a detailed distribution of the surface pressure of the seal portion should be obtained by the finite element method, but a following easy method was used in practice.

The surface pressure generated between two cylinders having the seal interference is calculated, applying a formula of "thermal insert".

That is to say,

$$Pm = 0.6E \cdot \Delta DS(R_2{}^2 - R_1{}^2)(R_3{}^2 - R_2{}^2)/R_2{}^3 \cdot (R3^2 - R_1{}^2):\ formula\ 1$$

wherein, E: Young's modulus, $R_3$: outer diameter of the coupling, $R_2$: outer diameter of the seal, $R_1$: inner diameter of the Pin.

Provided that when the seal portion S has the tangent point TP as shown in Fig. 3, Pcmax and Pc60 in Fig. 2 represent a value not smaller than six times the value obtained by the above-described formula 1 and a value not smaller than 3.6 times the value obtained by the above-described formula 1, respectively.

Therefore, it may be assumed that

$$Pc60 = 3.6\ Pm,$$

for the safety.

Next, since the minimum pressure resistance of the API grade N80 standard, in which the outer diameter x radial thickness = 88.9mm x 6.45mm, is 71.4 MPa, $\triangle$DS is obtained such that 3.6 Pm in the formula 1 is higher than the minimum pressure resistance of the standard. Herein, the $\triangle$DS minimum value = 0.07mm.

Procedure 3: From the above, the $\triangle$DS maximum value = 0.27 mm, and the $\triangle$DS minimum value = 0.07 mm are obtained, thus $\triangle$DS was set 0.22 mm.

Procedure 4: Condition of the seal length

If the degree of accuracy of the surface roughness of the convex curved surface-shape Pin is low, this causes galling and a leak, so that it has been required that the feeding is performed slowly when machining using a lathe, thereby disadvantageously lowering production efficiency.

Therefore, it is preferred that the seal portion is made as smaller as possible, but it is required that following conditions are cleared.

1) When fitting the screw, the Pin enters inside of the Box and the seal portion S is fitted. If a tip end diameter Dp1 of the Pin shown in Fig. 3 is not sufficiently smaller than an entrance diameter Db3 of the Box, a large surface pressure is locally generated to occur galling.

That is to say, it is required that a formula

$$Dp1 < Dp3$$

is satisfied.

2) After fitting the convex curved surface-shape Pin and the tapered Box around the tangent point TP which is a point at which the Pin and the Box come in point contact with each other, a predetermined contact length is required. Preferably, the predetermined contact length of at least 1.5 mm backward and forward, respectively, from the tangent point TP is secured. And if the contact surface approximates too much to the Pin end, this might be damaged when handling, so that it is preferable to leave a space of approximately 1.0 mm at the minimum.

Therefore, the tangent point TP is set 2.5 mm from the tip end of the Pin at the minimum.

3) It is also preferable that the length of 2.5 mm, which is obtained by summing the contact surface of 1.5 mm and a margin of 1.0mm, from the tangent point TP to the entrance of the tapered seal portion of the Box is secured. From the above, the minimum length of the tapered seal of the Box is set 5.0 mm.

4) Next, a setting condition of the seal length of the Pin will be described.

When fitting the Pin and the Box, screw grease is filled in a space between the tapered screw end portion and the seal portion, as shown in Fig. 6. However, due to a filling pressure thereof, a force to open the seal could be applied, thereby lowering the contact pressure of the seal. In order to prevent this, a space, referred to as a grease pocket GP, is required. Therefore, the length of the Pin seal should be made longer than the length of the tapered seal of the Box by approximately one thread (2 mm to 6 mm).

From the above-described conditions, the seal length is determined.

The tangent point TP was set 3.0mm from the Pin tip end. From this, the length of the Box tapered seal and the length of the Pin seal were set 5.5 mm and 8.5 mm, respectively.

Procedure 5: Determining a seal taper angle θs

First, the seal taper angle θs should be set equal to or larger than the screw taper angle θt of the tapered screw.

As the angle of the seal taper is larger, the length, along which the seal slides while rotating when fitting, is shorter, and this is advantageous in resisting galling. However, there is a disadvantage that residual thickness of the Pin seal tip end becomes small and the seal surface pressure is lowered under tension.

And, when the angle of the seal taper becomes small, the length, along which the seal slips, becomes long, and this is disadvantageous in resisting galling.

In consideration of the above-described circumstances, the seal taper angle θs is preferably equal to or larger than the screw taper angle θt, and in a range of 2 degree to 4 degree. Herein, the screw taper angle θt of the tapered screw was set 1.8 degree and the seal taper angle θs was set 2.4 degree.

Herein, it is required to confirm that the combination of the seal length obtained in the procedure 4 and the seal angle herein obtained satisfies the condition of Dp1 < Dp3 in Fig. 3, described in the procedure 4-1).

Procedure 6: Determining a radius R of the convex curved surface of the Pin

When the seal length PC3 and the seal taper (tanθ) are determined as described above, the radius R is obtained by using a formula

$$R = Pc3/tan\theta s.$$

If PC3 = 4.25 mm and θs = 2.4 degree, R = 101.6 mm.

The taper angle θt of the practical tapered screw is from 1.4 degree to 7.1 degree, and when the practical seal length is set from 4 mm to 15 mm, it is preferable that the radius R is set from 90 mm to 170 mm.

Procedure 7: Determining a shoulder angle γ between the Pin tip end and the shoulder

If the Box (coupling) has a projection and the Pin tip end in brought in contact with the shoulder, it is required to determine the angle γ of the shoulder. In general, this angle is preferably 0 degree or a negative angle.

Fig. 4 shows that, as the negative angle γ of the shoulder obtained by the finite element method is larger, this increases the seal contact surface pressure when fitting more effectively. However, as the negative angle is larger, the process becomes more difficult, so that this was set to 12 degree, in which the contact surface pressure increases by approximately 20%.

The final design values are shown in Fig. 6.

Meanwhile, although in the Example 1, it is described about the screw joint for oil well tubing of the API grade N80, in which outer diameter x radial thickness = 88.9 mm x 6.45 mm, the present invention is not limited to this, and is applied to all the conditions set forth in Claims.

Industrial Applicability

Although in the present invention, it is described about the screw joint for oil well tubing, this may be applied to the screw joint for pressure tubing, fastened by the tapered screw and the seal portion, which is applicable to all kinds of gases and liquids.

Description of Reference Numerals

| | |
|---|---|
| P | Pin having seal portion with convex curved surface shape |
| B | Box having tapered seal portion |
| S | seal portion |
| SR | shoulder portion |
| TAP | tapered seal portion |
| BAR | convex curved surface-shape portion |
| R | curvature radius of convex curved surface-shape portion |
| TP | tangent point which is contact point of convex curved surface-shape portion and tapered seal portion |
| LP1 | length of convex curved surface-shape portion in axial direction |
| LB1 | length of tapered seal portion in axial direction |
| DP2 | diameter of convex curved surface-shape portion at tangent point |
| DB2 | diameter of tapered seal portion at tangent point TP Pcmax theoretic maximum contact surface pressure at convex curved surface |
| Pc60 | contact surface pressure equivalent to 60% of maximum contact surface pressure |
| GP | grease pocket |

**Claims**

1. A screw joint for oil well tubing, comprising a male screw tube equipped with a seal forming portion having a convex curved surface shape in a tube axis direction on a tip end portion of the tube, and a female screw tube equipped with a tapered seal portion opposing to said seal forming portion, wherein when said convex curved surface shape comes into contact with said tapered seal portion, a contact surface pressure Pc60 equivalent to 60% of a maximum contact surface pressure Pcmax applied to a contact surface is designed to be larger than an inner pressure Pi applied to the screw joint and smaller than a proportional limit σr of a mechanical strength of a screw joint material.

2. The screw joint for oil well tubing according to Claim 1, wherein a seal taper angle θs of the tapered seal portion and a taper angle θt of a tapered screw satisfy a formula θs ≥ θt, and a curvature radius R of the convex curved surface shape is not smaller than 90 mm and not larger than 170 mm.

3. The screw joint for oil well tubing according to Claim 1 or 2, wherein the seal taper angle θs of said tapered seal portion is from 1.4 degree to 9.5 degree at an apex angle.

4. The screw joint for oil well tubing according to any one of Claims 1 to 3, wherein a length of said convex curved surface shape in an axial direction is at least not smaller than 1.5 mm backward and forward from a tangent point in the axial direction.

5. The screw joint for oil well tubing according to any one of Claims 1 to 4, wherein a surface roughness H of said convex curved surface and said tapered seal portion is not larger than 12s.

F I G. 1

F I G. 2

F I G. 3

F I G. 4

seal maximum contact surface pressure (kgf/cm2)

shoulder angle γ (negative angle)

FIG. 5

p: screw pitch    8 threads/inch
h: screw height    1.27 mm
θt: taper angle of tapered screw    1.8 degree

FIG. 6

tangent point

<table>
<tr><td colspan="2"><strong>INTERNATIONAL SEARCH REPORT</strong></td><td>International application No.<br>PCT/JP2005/009934</td></tr>
</table>

| A. CLASSIFICATION OF SUBJECT MATTER |
|---|
| Int.Cl$^7$ F16L15/04 |
| According to International Patent Classification (IPC) or to both national classification and IPC |

| B. FIELDS SEARCHED |
|---|
| Minimum documentation searched (classification system followed by classification symbols)<br>Int.Cl$^7$ F16L15/00-15/08 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 11-108264 A (Nippon Steel Corp.),<br>20 April, 1999 (20.04.99),<br>Par. Nos. [0015] to [0020]<br>(Family: none) | 1-5 |
| A | JP 10-96489 A (Sumitomo Metal Industries, Ltd.),<br>14 April, 1998 (14.04.98),<br>Par. Nos. [0055], [0056]<br>(Family: none) | 2-4 |
| A | JP 2003-28353 A (Sumitomo Metal Industries, Ltd.),<br>29 January, 2003 (29.01.03),<br>Full text<br>& WO 2003/006867 A1 & EP 1408269 A1<br>& US 2004/217592 A1 & CN 1527917 A | 5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 August, 2005 (23.08.05) | Date of mailing of the international search report<br>06 September, 2005 (06.09.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/009934 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-130552 A  (Sumitomo Metal Industries, Ltd.), 09 May, 2002 (09.05.02), Par. Nos. [0025] to [0030] (Family: none) | 1-5 |
| A | JP 2002-31279 A  (Sumitomo Metal Industries, Ltd.), 31 January, 2002 (31.01.02), Par. Nos. [0002] to [0013] & WO 2001/86185 A1        & AU 200156677 A & EP 1281905 A1          & US 2003/98585 A1 | 1-5 |

Form PCT/ISA/210 (continuation of second sheet) (January 2004)

**EP 1 754 920 A1**

**REFERENCES CITED IN THE DESCRIPTION**

**Patent documents cited in the description**

- JP 61006488 A